# EUROPEAN PATENT APPLICATION

(11) **EP 1 265 182 A2**
(43) Date of publication of application: **11.12.2002**
(21) Application number: 02253814.4
(22) Date of filing: 30.05.2002
(51) Int. Cl.: G06F 17/60

(54) **Validation system**

(30) Priority: 05.06.2001 GB 0113685
(71) Applicant: Security and Standards Limited, Chelmsford, Essex CM2 0LG (GB)
(72) Inventor: Pope, Nicholas Henry, Billericay (GB); Ross, John Gordon, Chelmsford (GB)
(74) Representative: Jehan, Robert

(57) **Abstract**

A validation system for validating an entity with whom a user intends to trade or exchange electronic information, includes validation means operable to obtain status details of the entity from third party validation sources and indicator means operable to indicate the obtained status to the user substantially in real time. It also includes means operable to determine the security of the communication medium between the user and the trading entity, the indicating means being operable to give an indication of the security of the communication substantially in real time. There are provided computer processing means operable to determine a trustworthiness indicator on the basis of one or more status details and/or communication security and to advise the user of the trustworthiness of the trading entity. The system can also generate a secure record of a transaction or exchange of electronic information with another entity including capture means operable to capture electronic data related to a transaction between a user and a trading entity and time stamp means operable to attach timing information to the captured data. The secure rccord can be stored either by the user or at a remote location controlled by an independent party.

## Description

The present invention relates to a validation system for use in commerce or other transaction carried out with a remote trader, for example through the Internet.

This invention is related to the invention disclosed in the applicant's earlier International Patent Application no. PCT/GB00/0427.

A problem with existing remote commercial transactions, such as purchases made through the Internet, is that the user (the buyer) has no guarantee of the trustworthiness of the company with which he/she wishes to trade. Similarly, the user is not always made aware of the nature of the contract with the trader, such as whether the connection is secure, whether any other entity is party to the transaction and so on.

International Patent Application no. PCT/GB00/0427 discloses mechanisms for determining the trustworthiness of a trading entity. The present invention extends the concepts disclosed in that application and provides a user interface.

According to an aspect of the present invention, there is provided a validation system as specified in claim 1.

Preferably, the system includes means operable to determine the security of the communication medium between the user and the trading entity, the indicating means being operable to give an indication of the security of the communication substantially in real time.

In the preferred embodiment, the system includes processing means operable to determine a trustworthiness indicator on the basis of one or more status details and/or communication security and to advise the user of the trustworthiness of the trading entity.

In the preferred embodiment, the indicator is a visual indicator, for example provided on a computer monitor. The indicator may consist, for example, of a series of colour signals each indicative of a level of trustworthiness, preferably a "traffic light" type set of signals.

According to another aspect of the present invention, there is provided a system for generating a secure record of a transaction or exchange of electronic information with another entity as specified in claim 12.

Advantageously, the system includes storage means for storing the secure record and/or printing means operable to print the secure record. In the preferred embodiment, the secure record is preferably stored, either by the user or at a remote location controlled by a third party. The secure record can be accessed when desired from the storage location.

In the preferred embodiment, the capture means is preferably provided in a user computer and is operable to capture screen displays relating to the transaction. Advantageously, the system is also able to capture data relating to the type of communication between the user and the trading entity.

These aspects of the present invention can be combined together.

An embodiment of the present invention is described below, by way of example only, with reference to the accompanying drawings, in which:
Figure 1 is an illustration of an embodiment of validation indicator;
Figure 2 is an example of task bar indicator;
Figure 3 is an enlarged view of the validation indicator of Figure 1;
Figure 4 is a view of a detail window showing the details providing the validation indicator of Figure 1;
Figures 5 to 7 show the three states of the validation indicator of Figure 1;
Figures 8 to 10 are examples of detail window for a three trustworthiness assessments;
Figure 11 shows an embodiment of display giving details of a trading entity;
Figure 12 shows displays giving details of the communication link with the trading entity;
Figures 13 to 18 show displays of details from a single website page generated by two different trading entities;
Figures 19 and 20 show respectively displays of websites having associations and not having associations with other trading entities;
Figure 21 shows how approved payment methods are displayed to the user;
Figures 22 and 23 show windows which enable configuration of the validation system by the user; and
Figures 24 to 28 show the contents and retrieval of a secure record.

The preferred embodiment is described in the context of a transaction carried out over the Internet, in particular a purchase by a consumer of a service or product. The details of the service or product and of the transaction itself are carried out via Website pages and the transaction is substantially entirely electronic.

The following description is based on a software system which interacts with a web browser or which may incorporate a web browser. The skilled person will readily be able to produce the required software to implement the described functions so this will not be described in detail.

The example given is based around a scenario of a purchaser procuring office supplies electronically, however the teachings herein are, of course, much wider than this scenario. They apply to any electronic information exchange or transaction across the Internet, Intranets or other public and private networks. They equally apply to any certificate based system, such as secure e-mail (S/MIME and PGP), IP-security, SET and other security protocols used in PKI systems.

The two main features of the validation system, the assessment of the security of a site and management of secure records, are described separately.

### ASSESSMENT

### Basic Indicators

The basic feature of the validation system is an indicator, which in the case of a visual indicator is preferably in the form of the "traffic light" indicator which provides an indication of whether a web browser based access to a web site is considered to be secure (green), should be treated with caution (amber) or is non-secure (red). The rules for exactly what forms a secure, caution or non-secure assessment are based on an assessment policy set up by the web user.

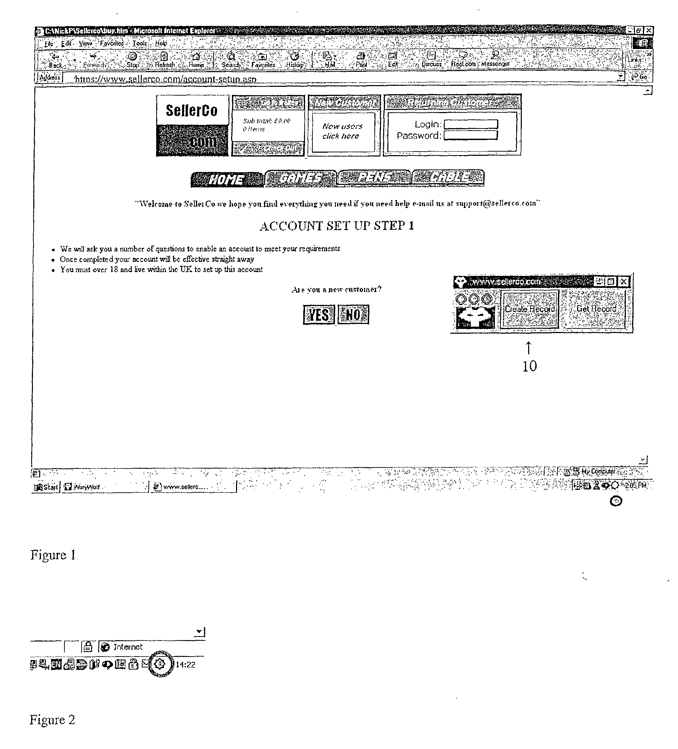

Consider, for example, a purchaser for BuyerCo using a web browser to look for a competitive source of office supplies for his/her company, identifies SellerCo as a potential source. An account with that company may typically be set up by a process similar to that shown in Figure 1.

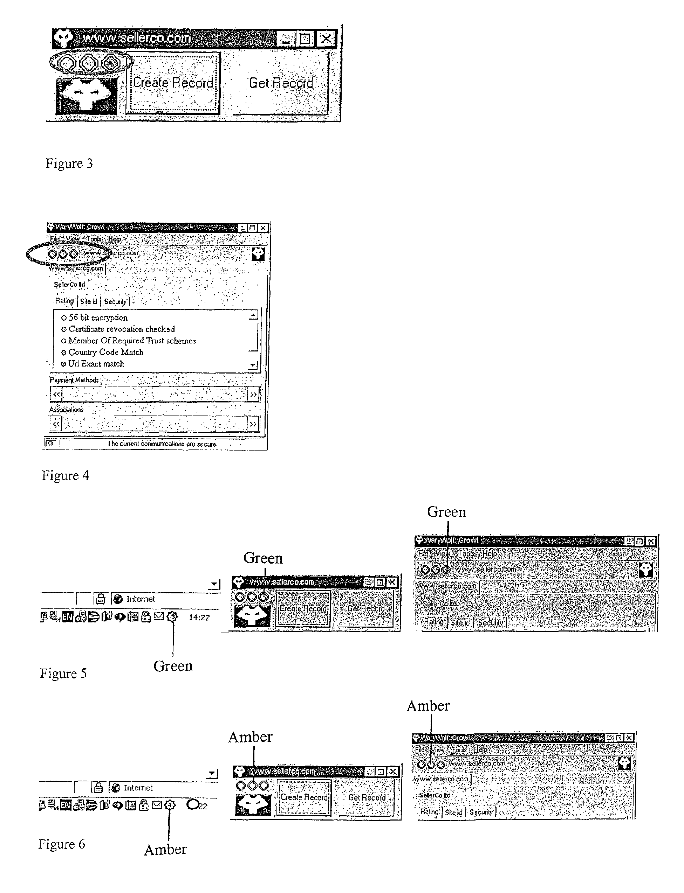

The validation system gives the BuyerCo purchaser a simple indication of whether this the security of SellerCo of meets all the requirements for his/her (BuyerCo) company policy for purchasing on-line through the green traffic light indicator 10. This traffic light indicator 10 can be placed in a convenient part of the user's windows environment. This indicator can appear:
a) in the task bar of the user's computer, as shown in Figure 1,
b) in a "minimised" control window as shown in Figures 1 and 3;
c) in a "maximised" control window as shown in Figure 4 which includes details about the assessment results obtained by the validation system to assist the user in deciding whether to proceed with the transaction, as described below.

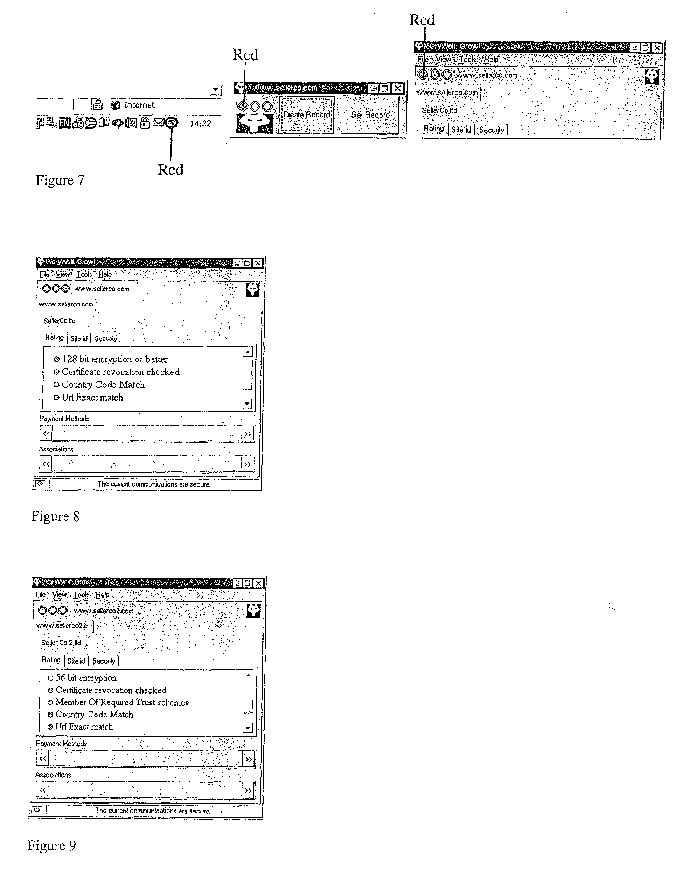

The traffic light indicator of the preferred embodiment has three basic states:
a) Green (see Figure 5): which indicates that all the user's policy requirements have been met and the entity is thus considered to be of highest trustworthiness;
b) Amber (see Figure 6): which indicates that there are some aspects of the user's policy that have not been fully met but none which totally negate the security for this access;
c) Red (see Figure 7): which indicates that the site access is non-secure or the trading entity has a major trustworthiness weakness according to the user's set policy.

Depending on the policy of BuyerCo, the possible actions of the purchaser based on the traffic light indicator could be:
a) Green: the purchaser would be able to proceed with setting up an account with SellerCo knowing that the risk to the security of the information provided is low;
b) Amber: the purchaser would not proceed with providing information for setting up an account to SellerCo until he/she has investigated further into the security of the access and the trustworthiness of SellerCo, possibly considering alternative suppliers. He/she would only proceed if he/she was confident that the possible risk was worth the advantages of trading with SellerCo; and
c) Red: the purchaser would not generally proceed with any actions which involve exchanging commercially sensitive data with SellerCo (for example, provide address or payment card details) on the page being displayed.

### Assessment Details

If the purchaser for BuyerCo feels uncertain about the risk associated with a purchase, for example in the case of an amber rating, then further details of the assessment can be obtained by selecting the maximised view of the assessment data window, an example of which is shown in Figure 8. The "rating" view of this window provides information on the rating factors which give the site its current assessment. The overall rating for the access to Sellerco.com is set to Green as all the factors required in the assessment policy are present as displayed.

If one of those factors is considered to be a possible security risk, this is indicated by an amber indicator against that factor. Once any factor is amber the overall rating is reduced to amber, as in Figure 9.

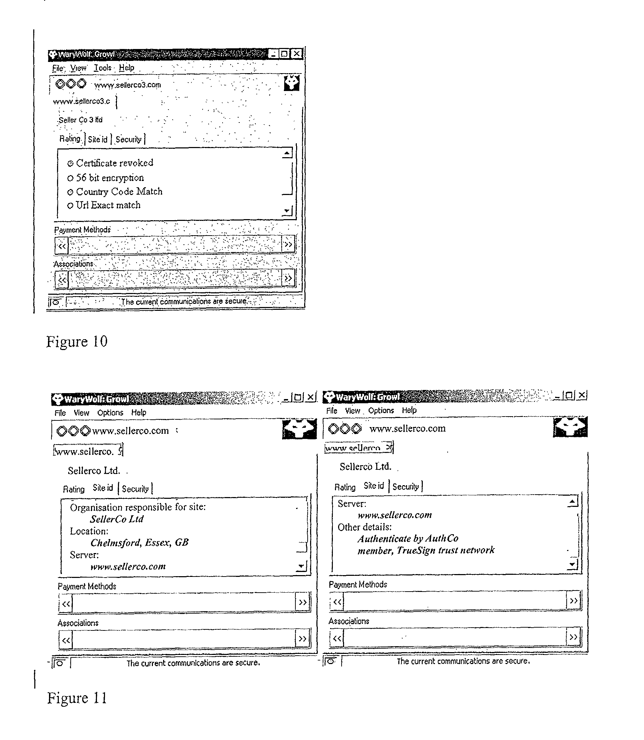

Similarly, if one of the factors is considered to be a major risk to the security of the access this is indicated by a red indicator against that factor. Once any factor is red the overall rating is reduced to red, as in Figure 10

It will be apparent to the skilled person that this assessment indication system provides a clear indication of trading risk to the user, which is not provided for in prior art systems. Indeed prior art systems generally fail to give the user any understanding of the risk implications and are thus generally ignored or disabled as they tend to become an irritation.

It is important to note that data of trading certificates, membership to trade organisations, trading and financial status are not obtained from the seller company but directly from the issuing authorities, such as the trade associations and government departments, and displayed in real time. The same applies to the communication assessment, that is the level of security of the communication between the user and the trading entity. Therefore, the user has immediate and clear access to up-to-date information on the trading entity and the communication link and a clear assessment of the risks involved.

### Site Identification

In addition to providing information about the assessment rating, the system can also provide information about the site identity as authenticated through the servers SSL server certificate, as shown in Figure 11. The purchaser can use this to gain assurance of the SellerCo is the registered company which operates this site, where it is located, what is the authenticated identity of the server, as well as any other information provided in the certificate.

### Security

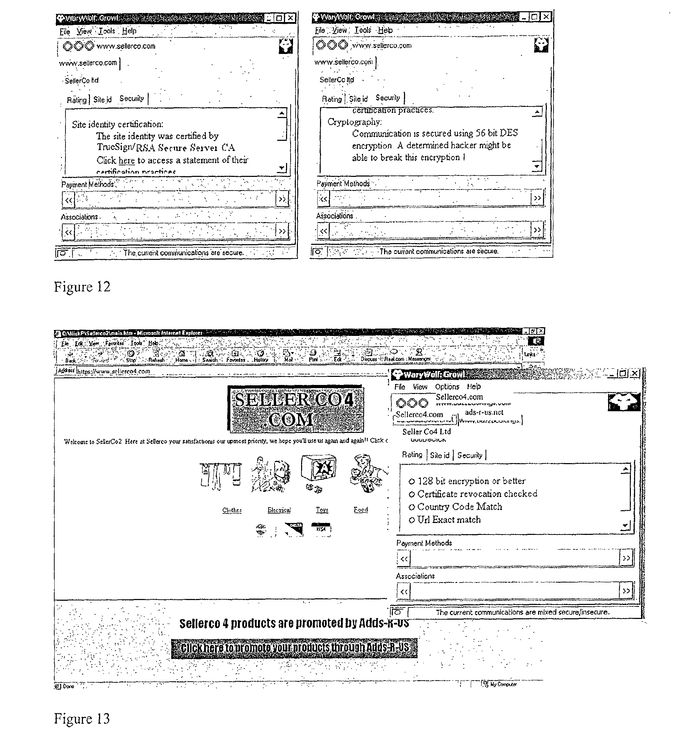

Further details of the security of certification authority that issued the certificate and strength of the cryptography employed in protecting access to the web site is provided under the security tab, as shown in Figure 12.

Another important feature of the preferred embodiment is its ability to warn and give details of communications which actually involve not just one but two or more trading entities. More specifically, some web pages are formed of information provided by different sources. For example, Figure 13 shows a Web page which includes advertisements from a trading entity Ads-Rus.com as well as information from trading entity SellerCo3. As shown in figure 13, the system provides two different detail windows, one for each trading entity and in these windows provides a separate set of rating and identity information for each entity.

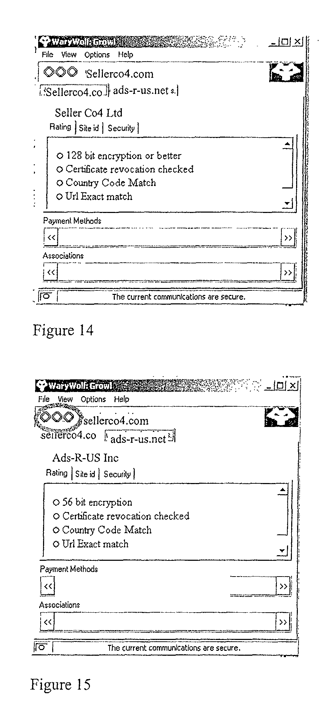

The rating information for main Seller4 site is as shown in Figure 14, while the rating information for the site providing the additional advertising information is as shown in Figure 15. In this example, there are some amber rated features for one of the sites, so the system set the overall rating to amber, which appears on the display 10 of Figure 1 and in the task bar indicator shown in Figure 2.

Similarly, the system is designed to assess the security of the communication link not only direct with the user but also between the different trading entities. In this manner, an insecure link between two trading entities providing information on a common Web page is advised to the user.

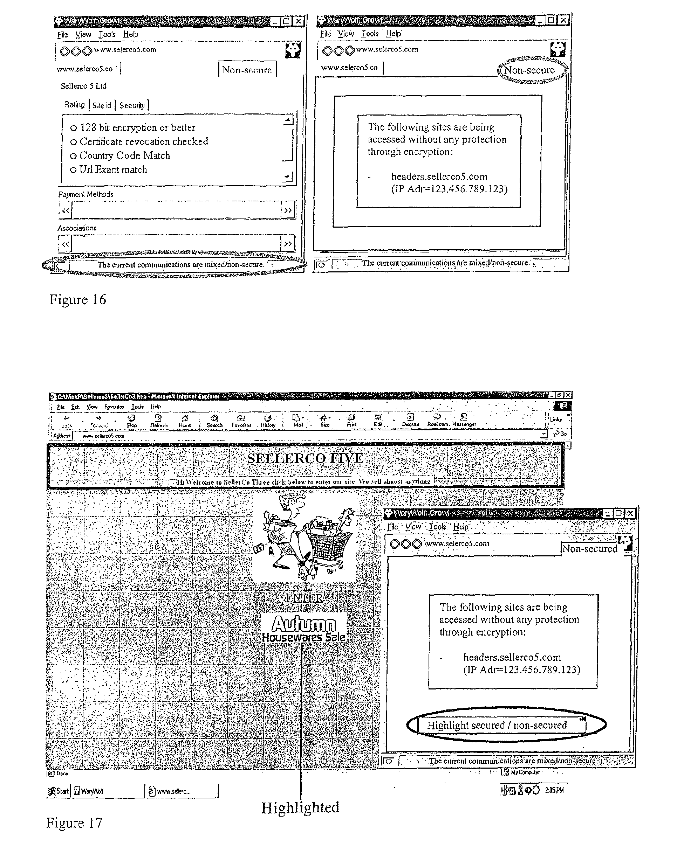

For example, in Figure 13, a web page is made up of information provided by different sources (trading entities), some secure and others non-secure. In the example, the general title bar is provided by a non-secure source. As can be seen in Figure 16, the system detects the communication links and displays to the user their status. In such a situation the rating indicator for the communications changes to amber and indicates that the communications is "mixed secure / non-secure". Also, an additional "non-secure" tab appears, which when selected show the names of the non-secure sites being accessed.

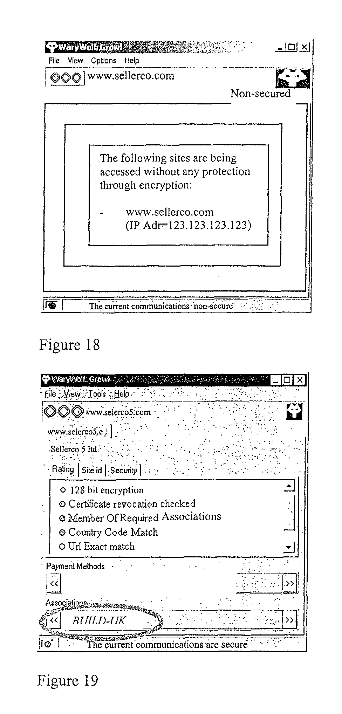

By building a specialised web browser, rather than building a monitoring tool around an existing web browser it is possible to provide the user with an indication of which parts of the Web page come from what source. For example, each area of the page can be overlaid with a colour relating to whether the source is secure or non-secure, as shown in Figure 17.

Commonly, when browsing the World Wide Web for information, the access to the sites is not secured. This can be acceptable to the user, provided that he/she is aware that there is no guarantee as to the authenticity of the data displayed and any input is not confidential. This can indicated by the red light indicator in the system toolbar and by a detail window as shown in Figure 18.

### Associations

An import factor in making a decision whether an organisation is trustworthy is not only the security of the access but also whether it is recognised under some business association. For example, there exist "trust schemes" for businesses operating over the Internet which define codes of practice to which this business should conform. One such a code of practice is operated by Trust UK. Another situation where the association of an organisation may effect the selection for trading, is where business are accredited as being bona-fide for that sector, for example the ACCA for chartered accountants in the UK and ABTA for travel agents.

The system can provide such information either by holding a database of information associated with the authenticated identity of the site or by direct and real time access to the trade association. This information on associations is used in the user display as shown in Figure 19. If a site is a member of a recognised association this is indicated by including the logo for that association in the "associations" list provided by the system for that site. Preferably, by clicking on that logo the user can see on his/her web browser further information about that association (for example, its code of practice). This could best be done by an automatic link to any website of that association.

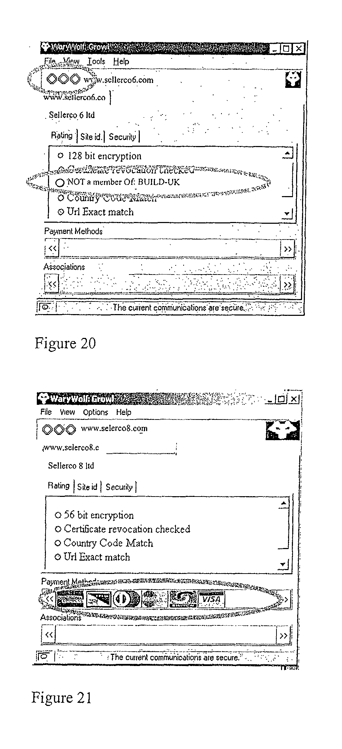

The system allows for the policy of the user's organisation (for example, BuyerCo in the scenario described) for a site to be fully acceptable (for example, rated green) that the SellerCo has to be a member of the association "BUILD-UK". Where membership of an association is a policy requirement this can be included in the rating information (see Figure 19). Thus, if the user accesses a site of a trading entity which is not a member of the required association, it will be given an amber rating, as shown in Figure 20.

It is important to note that the preferred embodiment does not rely upon the trading entity itself for the data but rather it obtains the data from the authorised source. Therefore, a trading entity cannot masquerade itself as a member of an association and easily fool a normal user by providing the same look and feel of the authentication check.

### Payment Methods

In a similar way to associations the system is designed to provide the payment methods supported by a site, as shown in Figure 21. In the preferred embodiment, the authentication for the payment methods is not obtained from the trading entity but from the standard web security protocol (SSL) or from the credit companies or banks.

### Other Information

Other information relating to an SSL authenticated site can be provided through the system interface. This can include:
a) legal information giving specific legal advice about trading between the user's home country and the country of the site being accessed. This could include information on import duties, data protection, consumer protection, e-commerce, legal recognition of electronic signatures (as required for secure records);
b) reports and rating information about the site from other users, user manager, independent organisations;
c) information on the number of accesses to a particular site (derived from the number of assessment checks made on a site counted by a central server).

### Setting up Assessment Policy

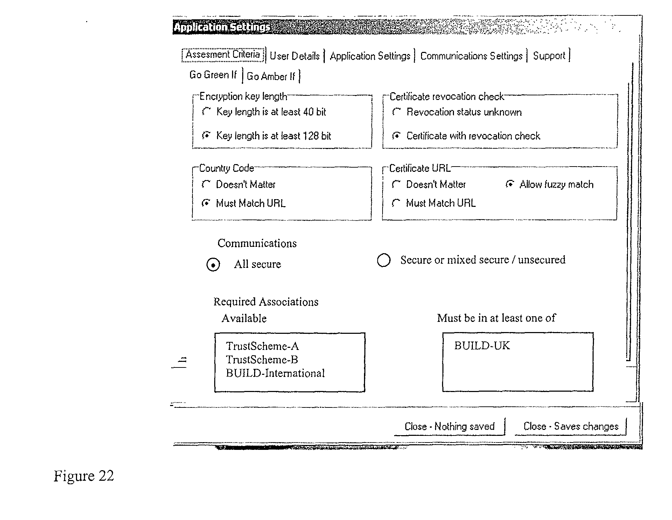

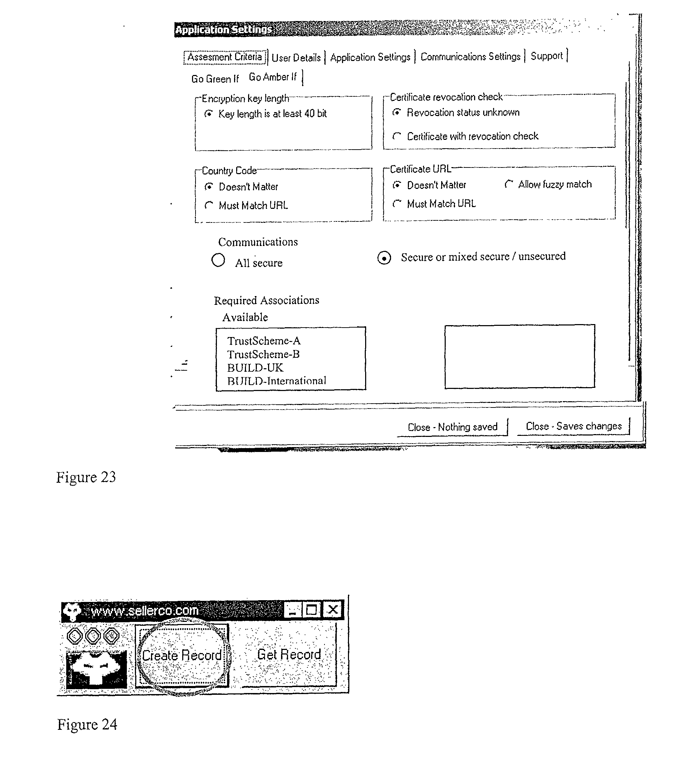

The system allows a user (or the manager of a group of users) to set up the policy rules for the assessment rating for a site through a special management interface. In the described scenario, the purchasing manager for BuyerCo could set up the policy rules through the settings interface of the system for his/her department. For example, the policy settings required for a Green rating could be as shown in Figure 22, for an Amber rating it could be as shown in Figure 23.

In the preferred embodiment, the Green rating is required to be at least as stringent that the Amber rating (for example, if the country code must match URL for amber, then this must also be required for Green). The preferred system will not save policies that break this rule.

A site is rated Red if it does not meet the requirements of an Amber rating.

### Impact of Caching

The preferred embodiment provides a system which is a real time monitor of external access of a user's web browser. Every time the browser makes a external access to a Website over a network such the Internet, this is detected by the system. This has the advantage of giving the user an indication of exactly what is happening when using the browser. Web browsers sometimes keep a local copy of information gathered when previously accessing a web site. The system preferably takes this into account by keeping a cache of all the accesses when going to a particular site and displays this cached information when returning to the site.

When using the system a user can minimise the use of caching by his/her browser to ensure that the most up-to-date assessment information is available. This is done by setting the option in his/her browser to "check for a newer version of stored pages" for "every visit to the page".

### SECURE RECORDS

### Single Records

When making a purchase or carrying out other commercial activities, on-line through the web browser there is commonly a need to obtain evidence of the transaction. For example, when an on-line purchase is made, on completion of the purchase request the supplier provides a final page specifying exactly what is purchased, at what price, along with other terms and conditions relating to the purchase. This is commonly considered to be a form of statement provided by the supplier of the goods to be supplied and typically establishes the contract between the parties.

In the preferred embodiment, the system enables the user to obtain a copy of at least one Web page, such as statement for the supply of goods, along with the authentication data used to establish a secure (SSL) connection to the supplier and other relevant evidence. If accesses to several secure sites are involved in building the Web page then the authentication data for all the accesses is collected. Also, basic (non-secure) addressing information is collected.

The page(s) of information can be collected in two forms, one a binary image of the data as displayed to the user, the other the structure data as sent by the web server (for example encoded in XML).

The collection of a secure record is achieved in the preferred embodiment either by simple "click" on the "create record" button (as shown in Figure 24) or by a code in the page of information provided by the seller's web server which instructs the system automatically to create a record.

The secure record can either be stored on the user's machine or held on behalf of the user in a central database. Due to the potentially sensitive nature of the data held in secure records they are preferably encrypted before storing. Additional clear-text attributes can be stored with each encrypted record to enable the appropriate records to be easily selected for retrieval. The attributes preferably used are:
a) the time that the record was created (as in the time-stamp),
b) the name of the primary site associated with the record (as displayed in the address bar of the current browser),
c) the title of the web page.

The collection of information which forms the secure record is time-stamped and sealed with a digital signature provided by a trusted server. This set of information provides strong evidence of the contract between the parties, typically the intention of the supplier to provide the specified goods for a particular price. The reasons are as follows:
a) as each secure record is time-stamped and signed by a trusted server, all the data in the record can be proven to have existed at the indicated time;
b) as each secure record would include authentication data from the server, it can be proven that the buyer's (BuyerCo) browser had accessed the seller's (SellerCo) web server a short period before the time indicated in the time-stamp;
c) as each secure record would include an image of what the user had displayed in the browser being monitored, it can be proven that this page of information was what was being viewed a short period before the time indicated in the time-stamp;
d) as each secure record can include the data as sent from the web server, it can be proven what data was received by the browser a short period before the time indicated in the time-stamp;
e) as each secure record would include information on any other non-secure communications happening a short period before the time indicated in the time-stamp, there is evidence of any other external factor which may have affected the data.

When digital signature based security becomes more widely deployed (for example with XML signatures) the system can be enhanced to make use of this as an additional security mechanism by capturing the digital signature as part of the secure record.

### Sequence of Records

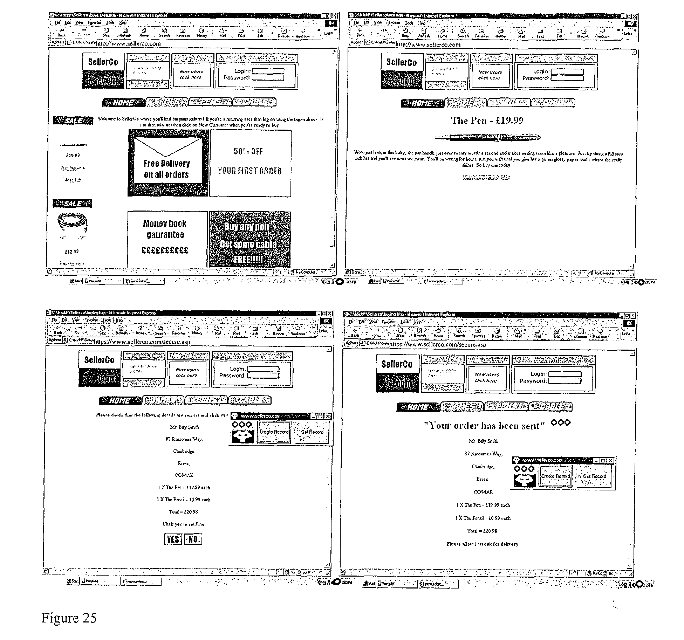

A commercial transaction, such as the purchase of office equipment, can involve a sequence of interactions between two parties such as a buyer and a seller. An example of the sequence of pages that may be captured for such a commercial transaction is illustrated in Figure 25.

As can be seen, the secure record facility enables the buyer to record all the related web pages as he/she passes through the various stages of the commercial transaction. This may be done:
a) by the user indicating the start and end of a related sequence,
b) by the seller including a code in all the web pages belonging to a related sequence,
c) by the user subsequently manually selecting records belonging to a sequence,
d) by software programmed into the buyer system which has knowledge of the expected pattern of a related sequence.

### Retrieval of Records

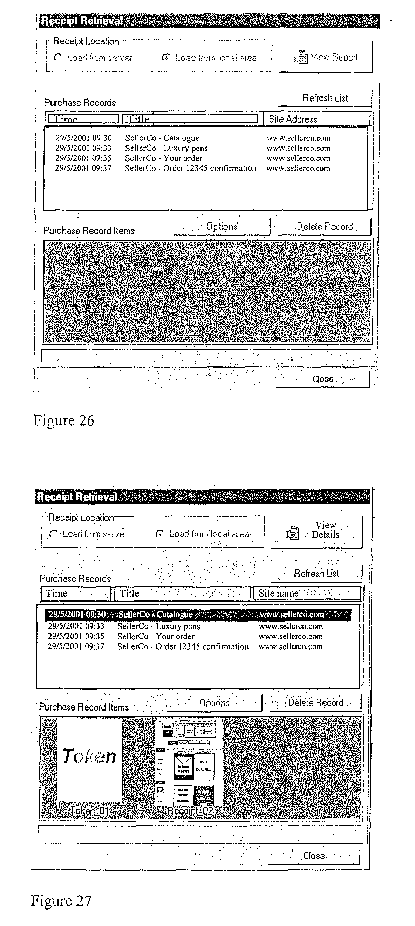

To retrieve secure records from the local or remote store the user "clicks" on the "retrieve record" button. This gives the user a window as shown in Figure 26 listing secure the records that have been created by the user. A particular secure record is selected for retrieval by pointing at the required entry (as in Figure 27). This results in that entry being retrieved from storage, decrypted and displayed in the form of a thumbprint image along with a token representing the authentication data associated with that image.

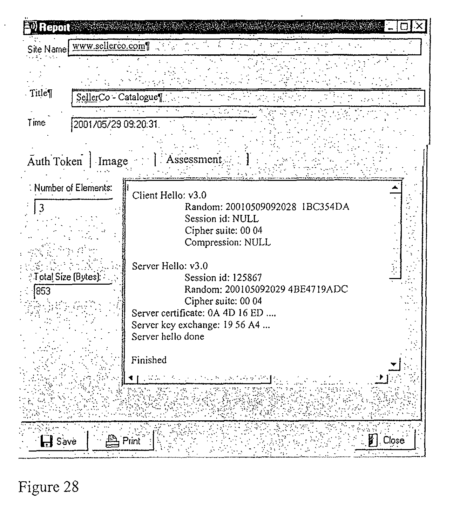

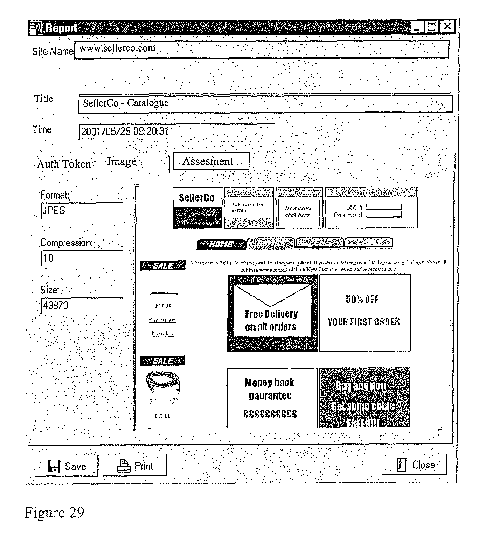

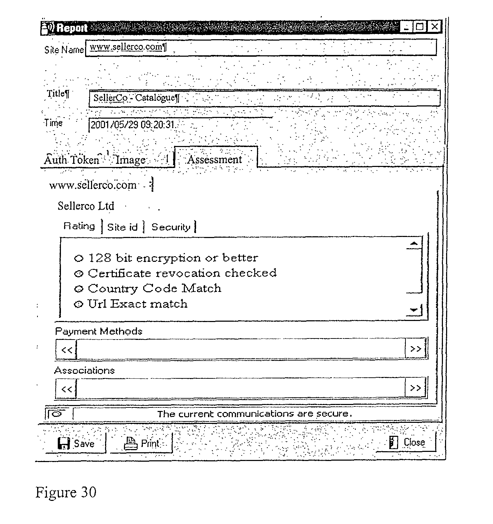

Further details of this record can be obtained by clicking on "View Details" which provides details of the secure record, including:
a) The binary authentication token (Figure 28);
b) The image collected (Figures 29 and 30).

Extensions to this facility will provide the capability to organise the secure records into folders for example to hold sequences of related records.

The disclosures in British patent application no. 0113685.2, from which this application claims priority, and in the abstract accompanying this application are incorporated herein by reference.

## Claims

1. A validation system for validating an entity with whom a user intends to trade or exchange electronic information, including computerised validation means operable to obtain status details of the entity from third party validation sources, and indicator means operable to indicate the obtained status to the user substantially in real time.

2. A system according to claim 1, including means operable to determine the security of the communication medium between the user and the trading entity, the indicating means being operable to give an indication of the security of the communication substantially in real time.

3. A system according to claim 1 or 2, including computer processing means operable to determine a trustworthiness indicator on the basis of one or more status details and/or communication security and to advise the user of the trustworthiness of the trading entity.

4. A system according to any preceding claim, wherein the indicator is a visual indicator.

5. A system according to any preceding claim, wherein the indicator provides a series of different signals each indicative of a level of trustworthiness.

6. A system according to any preceding claim, operable to generate a secure record of a transaction or exchange of electronic information with another entity including capture means operable to capture electronic data related to a transaction between a user and a trading entity and time stamp means operable to attach timing information to the captured data.

7. A system according to claim 6, including storage means for storing the secure record.

8. A system according to claim 7, wherein the storing means is located at a user location or at a remote location.

9. A system according to claim 6, 7 or 8, including printing means operable to print the secure record.

10. A system according to any one of claims 6 to 9, wherein the capture means is provided in a user computer and is operable to capture screen displays relating to the transaction.

11. A system according to claim 10, wherein the capture means is able to capture data relating to the type of communication between the user and the trading entity.

12. A system for generating a secure record of a transaction or exchange of electronic information with another entity including capture means operable to capture electronic data related to a transaction between a user and a trading entity and time stamp means operable to attach timing information to the captured data.

13. A system according to claim 12, including storage means for storing the secure record.

14. A system according to claim 13, wherein the storage means is located at a user location or at a remote location.

15. A system according to claim 12, 13 or 14, including printing means operable to print the secure record.

16. A system according to any one of claims 12 to 15, wherein the capture means is provided in a user computer and is operable to capture screen displays relating to the transaction.

17. A system according to claim 16, wherein the capture means is able to capture data relating to the type of communication between the user and the trading entity.
